# EUROPEAN PATENT APPLICATION

(11) **EP 1 657 266 A1**
(43) Date of publication of application: **17.05.2006**
(21) Application number: 05024966.3
(22) Date of filing: 15.11.2005
(51) Int. Cl.: C08G 18/28, C08G 18/80, C09D 5/44

(54) **Thermally curable coating compositions**

(30) Priority: 15.11.2004 US 988967
(71) Applicant: E.I. du Pont de Nemours and Company, Wilmington, DE 19898 (US)
(72) Inventor: Hermann, Ulrich, 8010 Graz (AT); Monschein, Guenther, 8401 Kalsdorf (AT); Schipfer, Rudolf, 8010 Graz (AT); Diestler, Johann, 8430 Tillmitsch (AT)
(74) Representative: DuPont Performance Coatings Biering/Blum/Kimpel

(57) **Abstract**

Thermally curable coating composition with a resin solids content which contains (a) at least one binder with isocyanate-reactive groups and at least one polyisocyanate crosslinking agent blocked with at least one N,N-dialkyl hydroxylamine and/or (b) at least one self-crosslinkable binder with isocyanate-reactive groups and with isocyanate groups blocked with at least one N,N-dialkyl hydroxylamine.

## Description

### Field of the Invention

The present invention relates to coating compositions thermally curable by reaction of isacyanate-reactivo groups (functional groups reactive with isocyanate and comprising active hydrogen) with isocyanate groups blocked with N,N-dialkyl hydroxylamine.

### Description of the Prior Art

Coating compositions which contain blocked polyisocyanate crosslinking agents constitute prior art, Alcohols, glycol ethers, amines, lactams, phenols, oximes, CH-acidic compounds and azoles are examples of blocking agents which have been used (c.f. A. Goldschmidt and H.-J. Streltberger, BASF Handbook on Basics of Coating Technology, Vincentz, Hannover 2003, pages 96 to 97).

### Summary of the Invention

Novel thermally curable (crosslinkable) coating compositions have now been developed which extend the available range of coating compositions curable by means of blocked isocyanate. It is advantageous that coating layers applied from said coating compositions can be bake-hardened at relatively low temperatures.

The invention therefore provides thermally curable coating compositions with a resin solids content which contains (a) at least one binder with isocyanate-reactive groups and at least one polyisocyanate crosslinking agent blocked with at least one N,N-dialkyl hydroxylamine and/or (b) at least one self-crossfinkable binder with isocyanate-reactive groups and with isocyanate groups blocked with at least one N,N-dialkyl hydroxylamine.

### Detailed Description of the Embodiments

The coating compositions are liquid coating compositions containing water and/or organic solvent or water and organic solvent-free coating compositions, for example, 100% solids liquid coatings or powder coatings. The resin solids content of the coating compositions comprises (a) at least one binder with isocyanate-reactive groups and at least one polyisocyanate crosslinking agent blocked with at least one N,N-dialkyl hydroxylamine and/or (b) at least one self-crosslinkable binder with isocyanate-reactive groups and with isocyanate groups blocked by means of at least one N,N-dialkyl hydroxylamine. Examples of isocyanate-reactive groups of the binders are hydroxyl groups and/or primary amino groups and/or secondary amino groups.

The coating compositions are preferably thermally externally crosslinking systems based on at least one binder with isocyanate-reactive groups and at least one polyisocyanate blocked by means of at least one N,N-dlalkyl hydroxylamine, as a separate crosslinking agent.

The binders comprising lsocyanate-reactive groups may be any desired binders known per se to the person skilled in the art, for example, polyester, polyurethane, polyurea, (meth)acrylic copolymer or epoxy resins, maleate oils, polybutadiene oils and binders derived from such resins, for example, also hybrid binders, in which at least two representatives of these binder classes are present and are joined together covalently and/or in the form of interpenetrating resin molecules.

In the case of aqueous coating compositions, the binders, if not dispersed by means of extemal emulsifiers, contain conventional groups providing water dilutability or water solubility, for example, ionic groups or groups which may be converted into ionic groups and/or hydrophilic polyether groups.

As already stated, the coating compositions are preferably coating compositions that crosslink externally with polyisocyanate blocked with N,N-dialkyl hydroxylamine.

Examples of N,N-dialkyl hydroxylamine-blockable polyisocyanates are diisocyanates, such as, aliphatic, cycloaliphatic, aromatic or araliphatic diisocyanates, for example, hexane diisocyanate, trimethylhexane diisocyanate, isophorone diisocyanate, cyclohexane diisocyanate, biscyclohexylmethane diisocyanate, norbornane diisocyanate, diphenylmethane dllsocyanate, tetramethylxylylene dilsoryanate, tolylene diisocyanate, phenylene diisocyanate, naphthylene diisocyanate, xylylene diisocyanate as well as triisocyanates, such as, trislsocyanatononane.

Further examples of N,N-dialkyl hydroxylamine-blockable polylsocyanates are oligomeric polylsocyanates derived from diisocyanates, for example, from diisocyanates stated In the preceding paragraph, and having number average molecular masses in the range from, for example, 336 to 1000 and isocyanate contents of, for example, 8 to 25 wt.%, In particular, such polyisocyanate oligomers which contain heteroatoms In the residue linking the lsocyanate groups. Examples of such substances are corresponding polylsocyanates comprising carbodllmide groups, allophanate groups, uretidione groups, isocyanurate groups, urethane groups and/or biuret groups. Particularly preferred compounds are addition products of 3 mols of diisocyanate and 1 mol of triol, such as, trimethylolpropane or 1:1-adducts formed from a cyclic carbonate and a dialkanol amine.

Further N,N-dialkyl hydroxylemine-blockable polylsocyanates are isocyanate-functional polymers having number average molecular masses of, for example, 800 to 10,000 and isocyanate contents of, for example, 2 to 27 wt.%. Processes for the production of such isocyanate-functional polymers are known to the person skilled In the art. Production may, for example, proceed by free-radical homo- or copolymerization of monolsocyanates with at least one olefinically unsaturated double bond per molecule. Examples of such monoisocyanates are free-radically homo- or copolymerizable monoisocyanates, such as, dimethyl-m-isopropenylbenzyl isocyanate or isocyanatoalkyl (meth)acrylates, such as, isocyanatoethyl (meth)acrylate.

Isocyanate-functional polymers may in particular also be produced by reacting simple polyisocyanates, for example, above-stated simple diisocyanates or oligomeric polyisocyanates, in particular diisocyanates, with sub-stoichiometric quantities of organic compounds with at least two groups capable of reacting with Isocyanate groups. Compounds of this kind that are preferably used are compounds comprising at least two primary and/or secondary amino groups and/or hydroxyl groups. Examples are low molecular weight polyols, polyamines and/or amino alcohols, such as, ethylene glycol, hexanediol, neopentyl glycol, butylethylpropanediol, cyclohexanedimethanol, trimethylolpropane, pentaerythritol, ethylenediamine, diethylonetrlamine, ethanolamine, methylethanolamine, as well as oligomeric or polymeric compounds having a number average molecular mass of 300 to 5,000. Examples of the latter are polymeric polyols, for example, polyester polyols, polyethers polyols and/or hydroxy-functional acrylic resins known per se In polyurethane chemistry.

N,N-dialkyl hydroxylamine is used to block the polyisocyanates. The N,N-dlalkyl hydroxylamines comprise preferably 3 to 8 carbon atoms and they may at the same time comprise two different or two identical alkyl groups which are selected from the group consisting of C1- to C4-alkyl radicals. N,N-diethyl hydroxylamine is preferred.

For blocking by means of N,N-dialkyl hydroxylamine, the isocyanate-functional component, in particular the polyisocyanate, may be added to the N,N-dlalkyl hydroxylamine or vice versa. Sufficient cooling to moderate the heat arising due to the exothermic nature of the blocking reaction must be ensured; the reaction temperature should preferably not exceed 55°C.

The lsocyanate groups of the polyisocyanates are blocked completely and preferably exclusively with one or more N,N-dialkyl hydroxylamines, preferably, a single one thereof. If desired, however, up to 80%, preferably no more than 50%, of the isocyanate groups to be blocked may be blocked with at least one other monofunctional blocking agent. Other blocking agents that may be considered alone or in combination are monofunctional compounds known for blocking isocyanates, such as, the CH-acldlc, NH-, SH- or OH-functional compounds known for this purpose. Examples are CH-acidic compounds, such as, acetylacetone, acetoacetic acid alkyl esters, malonic acid dialkyl esters; aliphatic or cycloaliphatic alcohols, such as, n-butanol, 2-ethylhexanol, cyclohexanol; glycol ethers, such as, ethylene glycol monobutylether; phenols; oximes, such as, methyl ethyl katoxime, acetone oxime, cyclohexanone oxlme; lactams, such as, caprolectam, azole blocking agents of the imidazole, pyrazole, triazole or tetrazole type.

In co-blocking, 20 to below 100% of the isocyanate groups to be blocked are reacted by means of N,N-dialkyl hydroxylamine and above 0 to 80% of the isocyanate groups to be blocked are reacted with at least one monofunctional blocking agent other than N,N-dialkyl hydroxylamine.

The reaction may proceed in accordance with the conventional processing principles known for the production of co-blocked polyisocyanate components, as a single stage process, in which all the blocking agents are simultaneously reacted with the polyisocyanate, or as a multistage process, for example, by initially performing partial blocking with N,N-dlalkyl hydroxylamine and then reacting any remaining free isocyanate groups with at least one further blocking agent or the co-blocking may be performed in the reverse order.

Alternatively, the polyisocyanates blocked with at least one N,N-dialkyl hydroxylamine may be produced by (partially) blocking simple isocyanate components with N,N-dialkyl hydroxylamine and optionally, at least one further blocking agent and then reacting them to yield blocked oligomeric or polymeric polyisocyanate components.

For example, a monoisocyanate comprising at least one olefinically unsaturated double bond may be blocked exclusively with N,N-dialkyl hydroxylamine or optionally, a proportion of such a monoisocyanate may be blocked with N,N-dialkyl hydroxylamine and the remainder with at least one further monofunctional blocking agent, and then be free-radically homopoiymerized or copolymerized together with appropriate olefinically unsaturated comonomers.

A polyisocyanate may, for example, also initially be partially blocked with at least one N,N-dialkyl hydroxylamine and optionally, at least one further blocking agent; in particular a diisocyanate may be half-blocked with at least one N,N,dialkyl hydroxylamine and optionally, at least one further blocking agent and then used as a synthesis building block for synthesizing oligomeric or polymeric blocked polyisocyanates. The synthesis methods used for this purpose are those known to the person skilled in the art, either those which give rise to molecular synthesis with direct Involvement of remaining unblocked isocyanate groups or those wherein remaining unblocked Isocyanate groups are Initially reacted with a compound which comprises, In addition to at least one group comprising active hydrogen, at least one further functional group. The latter may subsequently be used to synthesize oligomeric or polymeric blocked polyisocyanates. The reaction of remaining unblocked isocyanate groups with hydroxyalkyl (meth)acrylate may be mentioned merely by way of example, wherein blocked polyisocyanates are obtained, the olefinically unsaturated double bonds of which may be used to synthesize oligomeric or polymeric products, for example, by means of free-radical polymerization.

It goes without saying, that all the reactions required for the production of the blocked polylsocyanates which Involve free isocyanate groups proceed, of course, In the absence of water and solvents comprising active hydrogen. Such reactions are accordingly performed without solvent, for example, in a melt, or In solvents, which contain no active hydrogen. Examples of suitable solvents are N-methylpyrrolidone; dimethylformamide; ketones, such as, acetone, methyl ethyl ketone, cyclohexanone; esters, such as, butyl acetate and ethyl acetate. Once blocking is complete, solvents containing active hydrogen may also be added and/or inert solvent may be removed, for example, by (vacuum) distillation at sufficiently low temperatures, which do not permit any elimination of the N,N-dialkyl hydroxylamine and optionally, any further blocking agents from the blocked polyisocyanate.

In addition to the resin solids content, the coating compositions may contain conventional coating constituents, such as, for example, pigments, extenders and/or additives. If the coating compositions are not liquid 100%-systems or powder coatings, the coating compositions may contain organic solvent and/or water.

Depending on the nature thereof, the coating compositions may be used for the production of a single-layer coating or of one or more coating layers within a multilayer coating structure, for example, a filler, a pigmented top coat or a Gear coat layer, in particular however, a primer coat. Application may be performed by means of conventional application methods such as, for example, spraying, dipping or knife coating onto the widest possible range of substrates. Thermal curing proceeds, in particular, by baking at object temperatures of 120 to 250°C, preferably of 130 to 180°C. For coating with the coating compositions according to the invention, substrates of all materials are suitable, which withstand the temperatures arising during subsequent thermal curing. Metal substrates are particularly suitable.

In thermal curing, the Isocyanate groups blocked with N,N-dialkyl hydroxylamine are released with elimination of the N,N-dialkyl hydroxylamine and they may crosslink by addition with the Isocyanate-reactive groups of the binder.

The coating compositions according to the invention are preferably electrode position (ED) coating compositions, which are applied in conventional manner by electrodeposition and then thermally cured, for example, baked. These are aqueous coating compositions with a solids content of, for example, 10 to 30 wt.%. The solids content consists of the resin solids content, which comprises at least one electrodepositable binder (ED binder) with isocyanate-reactive groups and at least one polyisocyanate crosslinking agent blocked with at least one N,N-dialkyl hydroxylamine and/or at least one self-crosslinkable ED binder with isocyanate-reactive groups and with isocyanate groups blocked by means of at least one N,N-dialkyl hydroxylamine, and optionally, of extenders, pigments and non-volatile conventional coating additives. Water and optionally, organic solvents and optionally, volatile additives form the volatile constituents.

The ED coating compositions may contain color-imparting and/or special effect-imparting pigments and/or extenders in a ratio by weight of pigment plus extender to resin solids content of, for example, 0:1 to 0.8:1.

Examples of pigments and extenders which may be used in the ED coating compositions are conventional Inorganic and/or organic colored pigments and/or special effect pigments, such as, for example, titanium dioxide, iron oxide pigments, carbon black, phthalocyanine pigments, quinacridone pigments, metal pigments, Interference pigments, kaolin, talcum or silicon dioxide.

The ED coating compositions may contain conventional additives, for example, in proportions of in each case 0.1 to 10 wt.%, preferably 0.5 to 7 wt.%, relative to resin solids content. Examples of additives are organic solvents, wetting agents, neutralizing agents, levelling agents, catalysts, antifoaming agents, light stabilizers, antloxidants, colorants, biocides and anticratering additives.

The ED coating compositions may be conventional anodic ED (AED) coating compositions or cathodic ED (CED) coating compositions, AED coating compositions contain binders conventional for AED coatings, for example, based on polyesters, epoxy resin esters, (meth)acrylic copolymer resins, maleate oils or polybutadiene oils with a weight average molecular mass (Mw) of, for example, 300 to 10000 and an acid value from 35 to 300 mg KOH/g. In addition to the isocyanate-reactive groups, In particular hydroxyl groups, the AED binders bear acidic groups such as, In particular, COOH groups and may be converted into the aqueous phase after neutralization of at least some of the acidic groups with bases, in particular amines.

The ED coating compositions are preferably CED coating compositions based on cathodically electrodepositable binders (CED binders) with isocyanate-reactive groups. CED binders carry cationic groups or groups able to be converted into cationic groups, e.g., alkaline groups, e.g., amino groups, ammonium groups, for example, quaternary ammonium, phosphonium and/or sulphonlum groups. Preferred are alkaline groups, in particular, preferred are nitrogen-containing alkaline groups, such as, amino groups. These groups may be present In quatemlzed form, or they are converted into cationic groups with a conventional neutralizing agent, for example, lactic acid, formic acid, acetic acidor methanesulfionic acid. The groups able to be converted Into cationic groups may be present in completely or partially neutralized form. The CED binders are preferably resins containing tertiary amino groups and optionally, primary and/or secondary amino groups, the total amine value of which is 20 to 150, preferably, 50 to 100 mg KOH/g, The weight average molecular mass (Mw) of these binders Is preferably about 300 to 10000. Examples of lsocyanate-reactive groups of the CED binders are primary amino groups, secondary amino groups and in particular hydroxyl groups. The CED binders may comprise one, two or all three types of these Isocyanate-reactive groups; in general, they contain hydroxyl groups. The proportion of the groups comprising active hydrogen In the CED binders corresponds to an active hydrogen value of 50 to 300 mg KOH/g, for example, corresponding to a sum of primary amine value, secondary amine value and hydroxyl value; the hydroxyl value itself being, for example, in the range of 50 to 250 mg KOH/g.

Examples of CED binders are the conventional ones known to the skilled person, such as, amino(meth)acrylic resins, aminopolyurethane resins, amino group-containing polybutadiene resins or modified epoxy resin-carbon dioxide-amine reaction products, and In particular, aminoepoxy resins, especially, aminoepoxy resins with primary OH groups.

Both the AED and the CED coating compositions may be supplied to the user as single- or multi-component materials and be used by said user for the preparation of ED coating baths or for making up the solids content of ED coating baths which are in operation.

The single-component materials are aqueous concentrates, which contain at least one ED binder with isocyanate-reactive groups and at least one polyisocyanate blocked with at least one N,N-dialkyl hydroxylamine as crosslinking agent and/or at least one self-crosslinkable ED binder with isocyanate-reactive groups and with isocyanate groups blocked with at least one N,N-dialkyl hydroxylamine and, In general, pigments.

Two-component materials, on the other hand, are generally a) an aqueous dispersion of at least one ED binder with isocyanate-reactive groups and at least one polyisocyanate crosslinking agent blocked with at least one N,N-dialkyl hydroxylamine and/or of at least one self-crosslinkable ED binder with Isocyanate-reactive groups and with lsocyanate groups blocked with at least one N,N-dialkyl hydroxylamine and b) a separate aqueous pigment paste.

Also possible, for example, is the formulation as a multi-component system consisting of aqueous ED binder dispersion and non-aqueous preparation of the polyisocyanate crosslinking agent blocked by means of N,N-dialkyl hydroxylamine, wherein each of the two components may be pigmented or wherein a separate pigment paste may be added as a further component.

ED coating layers may be deposited from the ED coating compositions in a conventional manner known to the person skilled In the art on electrically conductive substrates, in particular metal substrates, such as, automotive bodies or body parts and then cured thermally, in particular by baking at object temperatures of 120 to 250°C, preferably of 130 to 180°C.

In the following examples, all parts and percentages are on a weight basis unless otherwise indicated.

### Examples

### Example 1 (Production of Bismuth Lactate):

901 g of lactic acid (70 wt% In water) were Initially introduced and heated to 70°C. 466g of bismuth oxide (Bl₂O₃) was added In small portions while the mixture was stirred. After an additional 6 hours of stirring at 70°C, the batch was cooled to 20°C and left to stand unstirred for 12 hours. Finally, the precipitate was filtered out, washed with a little water and ethanol and dried at a temperature of 40 to 60°C.

### Example 2 (Production of a CED Binder):

A mixture of 666g methoxypropanol, 319g bisphenol A. 591g of an adduct of 2 mol epoxy resin (based on bisphenol A / epichlorhydrine; epoxy equivalent weight 190) and 1 mol polypropylene glycol 400 and 886g epoxy resin (based on bisphenol A / epichlorhydrine: epoxy equivalent weight 190) was heated to 45°C and stirred for 1 hour. 121g diethanolamine and 81.5g dimethyl aminopropylamine were then added and the batch was stirred for 2 hours at 125°C. The methoxypropanol was then disfiilled off under vacuum and the batch was diluted with 240g hexyl glycol to yield a solution of an aminoepoxy resin.

### Examples 3 a-c (Production of Blocked Polyisocyanates):

The substances stated in Table 1 were reacted according to the following general procedure:

2.75 mol of diisocyanate and 233 g of methyl isobutyl ketone were weighed out into a reaction vessel and stirred at room temperature. Then 2.75 mol of monofunctional blocking agent were added in one hour with cooling, Once a constant NCO value had been reached, 1 mol of the 1:1 adduct obtained from propyleno carbonate and diethanolamine and 4.1 g of dibutyltin dilaurate (catalyst) were added. The reaction mixture was kept at 50°C until no free lsocyanate could any longer be detected.

**Table 1**

| Example | Diisocyanate | Blocking agent |
|---|---|---|
| 3a | Diphenylmethane dilsocyanate | N,N-diethyl hydroxylamine |
| 3b | Tolylene dilsocyanate | N,N-diethyl hydroxylamine |
| 3c | Diphenylmethane diisocyanate | Diethylene glycol monobutyl ether |

### Examples 4a-c (Production of CED Clear Coats):

In each case, the aminoepoxy resin solution from Example 2 was mixed with the respective solution of blocked polyisocyanate from Examples 3 a-c In a solids weight ratio of 70:30. Bismuth lactate (from Example 1) was added as catalyst corresponding to a content of 1.3 wt.% bismuth, relative to resin solids, and dilution was performed with formic acid and deionized water to yield a 12 wt.% CED clear coat with an acid content of 33 milllequlvalents per 100 g of resin solids.

### Examples 4d-f (Production of CED Clear Coats):

Work was performed as in Examples 4a-c with the only difference that no bismuth lactate was added.

Unphosphated steel sheets were coated with CED clear coats 4a-f in conventional manner by cathodic electrodeposition to a dry film thickness of 20 µm and baked for 20 minutes at various baking temperatures (120, 130, 140, 150, 160, 170 and 180 °C object temperature).

The baked CED coating layers were tested for completeness of cross-linking by testing the acetone resistance:
To this end, acetone was placed on the baked CED coating layer and covered with a watchglass. After leaving the CED coating layer covered with the watchglass for different time periods (maximum 180 seconds), the watchglass was removed and the CED coating layer was tested for softening and lack of change by scratching with a hom spatula. Thus, the time period to impair the CED coating layer by acetone was determined.
Moreover, the baked CED coating layers were tested to assess their anticorrosive effect. To this end, creep corrosion at the cut (in mm, on one side) was determined after a salt spray test lasting 240 hours (in accordance with DIN 50 021-SS in conjunction with DIN 53 167).

The results are summarized in Table 2.

**Table 2**

| CED Coating Bath | Acetone resistance after baking at °C (seconds) | | | | | | | Creep corrosion at the cut (on one side, In mm) after baking at °C | | | | | |
|---|---|---|---|---|---|---|---|---|---|---|---|---|---|
| | 120 | 130 | 140 | 150 | 160 | 170 | 180 | 130 | 140 | 150 | 160 | 170 | 180 |
| 4a | 60 | 120 | >18 0 | >18 0 | >18 0 | >18 0 | >18 0 | 4-5 | 3-4 | 3 | 2-3 | 2-3 | 2-3 |
| 4b | 5 | 60 | 150 | >18 0 | >18 0 | >18 0 | >18 0 | 8 | 6 | 4 | 3-4 | 3 | 2-3 |
| 4c | 5 | 5 | 30 | >18 0 | >18 0 | >18 0 | >18 0 | 9 | 8 | 4 | 3 | 2-3 | 2-3 |
| 4d | 5 | 5 | 30 | 50 | 60 | 90 | 100 | 9- 10 | 9-10 | 7 | 6 | 4-5 | 3-4 |
| 4e | 5 | 5 | 20 | 30 | 50 | 60 | 80 | 10 | 9 | 9 | 7 | 5-6 | 5 |
| 4f | 5 | 5 | 5 | 10 | 30 | 40 | 60 | 9-10 | 9- 10 | 9 | 6 | 5-6 | 5 |

## Claims

1. Thermally curable coating composition with a resin solids content comprising (a) at least one binder with lsocyanate-reactive groups and at least one polyisocyanate crosslinking agent blocked with at least one N,N-dialkyl hydroxylamine or (b) at least one self crosslinkable binder with isocyanate-reactive groups and with isocyanate groups blocked with at least one N,N-dialkyl hydroxylamine or a mixture of (a) and (b).

2. The coating composition of claim 1, wherein 20 to below 100% of the blocked isocyanate groups are blocked with the at least one N,N-dialkyl hydroxylamine and above 0 to 80% of the blocked isocyanate groups are blocked with at least one other monofunctional blocking agent,

3. The coating composition of claim 1 or 2, wherein the at least one N,N-dialkyl hydroxylamine is N,N-diethyl hydroxylamine.

4. The coating composition of claim 1, 2 or 3, wherein the isocyanate-reactive groups are selected from the group consisting of hydroxyl groups, primary amino groups, secondary amino groups and combinations thereof.

5. The coating composition of any one of claims 1 to 4, wherein the coating compositions are selected from the group consisting of water-containing coating compositions, organic solvent-containing coating compositions, water- and organic solvent-containing coating compositions, water- and organic solvent-free liquid coating compositions and powder coatings.

6. A process for the production of a coating layer on a substrate which comprises applying the coating composition of any one of claims 1 to 5 and thermal curing of the applied coating layer,

7. The process of claim 6, wherein the coating layer is selected from the group consisting of a single-layer coating and a coating layer forming a coating layer within a multilayer coating structure.

8. The process of claim 6, wherein the coating composition is an electrodeposition coating composition and is applied onto an electrically conductive substrate by electrodeposition coating.

9. A substrate coated with the composition of any one of claims 1 to 5.
